# EUROPEAN PATENT SPECIFICATION

(11) **EP 1 663 440 B1**
(45) Date of publication and mention of the grant of the patent: **03.01.2007**
(21) Application number: 04784028.5
(22) Date of filing: 13.09.2004
(51) Int. Cl.: B01D 29/54, B01D 29/31

(54) **NON-COLLAPSIBLE DUAL FILTER ELEMENT**
NICHT ZUSAMMENFALTBARES DOPPELFILTERELEMENT
ELEMENT FILTRE DOUBLE NON PLIABLE

(30) Priority: 12.09.2003 US 502387 P
(43) Date of publication of application: 07.06.2006
(73) Proprietor: 3M Innovative Properties Company, St. Paul, MN 55133-3427 (US)
(72) Inventor: PATEL, Mahesh, Z., Plantsville, CT 06479 (US); HAMLIN, Thomas, J., Vernon, CT 06066 (US); PULEK, John, L., Cheshire, CT 06410 (US); O'HARA, Conor, Guilford, CT 06437 (US)
(74) Representative: Charig, Raymond Julian
(86) International application number: PCT/US2004/030031
(87) International publication number: WO 2005/028072

(56) References cited:
- DE-A- 3 905 854
- US-A- 1 647 799
- US-A- 2 448 157
- US-A- 2 792 118
- US-B1- 6 409 919

## Description

### Background of the Disclosure

The present disclosure relates generally to the field of fluid filtration, and more particularly to a filter element for use in liquid filtration systems which is, presently preferably, non-collapsible and which incorporates the use of a space formed between a filtration element having dual spaced apart filter media sleeves.

Dual filter elements having concentrically arranged cylindrical sleeves are known in the art. U.S. Patents 6,238,560 and 6,030,531, both issued to M. Gershenson (the "Gershenson patents") describe such a filter element utilizing cylindrical filter sleeves made of flexible bag -type filter media so that the filter element is collapsible. The filter element described in the Gershenson patents utilizes an inlet plate and an end terminal plate to which the flexible media is securely attached. Because the media used therein is flexible bag-type, collapsible media, the filter element of the aforementioned patents requires that it be supported, such as, for example, by a retainer basket having concentrically arranged cylindrical support screens defining an annular space therebetween into which the filter element may be removably inserted. The dual filter element described in the Gershenson patents would collapsible so that the inlet and end terminal plates are axially movable toward and away from each other. Because the Gershenson type filter element utilizes conventional bag-type filter media which is flexible, the element is collapsible and thus difficult to achieve proper placement within the restrainer basket. In certain circumstances insertion of such a collapsible filter element requires the use of tooling or manipulating devices in order to position it correctly in the supporting basket. Additionally, because the Gershenson type filter element is collapsible, a support restraining basket is required for its use within a filter housing.

U.S. Patents Numbers 6,238,560 and 6,030,531 and others to Gershenson disclose two flexible or collapsible cylindrical filter sleeves but do not describe the use of any rigid filter media.

U.S. Patent Number 6,511,598 to Gershenson discloses a cartridge type design which describes the use of flexible filter media that requires a core/basket built into the filter element for support but does not mention rigid media.

U.S. Patent Number 4,552,661 discloses flexible bag type filter media and includes one tubular shaped filter media but does not mention rigid media.

U.S. Patent Number 5, 075,004 to Hayward discloses use of the flexible bag type filter media and includes one tubular shape filter media but does not mention rigid media.

U. S. Patent Number 5,840,188 to Le Sac discloses the use of one filter bag, which includes flexible filter media.

Other prior art includes pleated, such as, for example, Pall, Filterite, and other manufacturers, coreless pleated filter elements that are installed over a reusable metal supporting core or basket. However, the disclosure includes only one cylinder per filter assembly which flows outside in or inside out if a basket is used.

Rigid filter cylinders provide the self supporting structure. Therefore there is no need for additional or separate support structure as part of the filter element, such as a basket or filter basket.

As is known, conventional bag type filters are flexible but this flexibility presents problems when inserting the flexible bag filters into the vessel or basket in that often such insertion operation requires additional tool(s) and effort to accomplish the correct, operative placement in to the basket.

Since flexible bag media has proved to be a less than optimum or efficient filter media, an improved efficiency/retention filtration system is needed to more completely remove unwanted contaminants.

All the bag type filters believed to currently be on the market, including the above, had been using and currently use flexible filter media. As described above, these bag type filters have historically created problems during installation of the filter in to the filter housing. These prior bag type filters do not have the flexibility to use any filler type adsorption media, such as GAC to provide additional filtration features such as, for example, lead or chlorine removal from the fluid. Further, flexible bag media has not proven to be as consistent or efficient as compared to typical rigid depth cartridges.

Utilizing pleated filters with one cylinder, results in contaminants being trapped on the exterior of the filter, or if the flow is inside out, contaminants are trapped inside, but large hold-up volume/weight makes changing filters difficult.

Thus, there is a need for a new and innovative liquid filter device having a first non-collapsible filter element formed of filter media, a second non-collapsible filter element formed of filter media, the first filter element being operatively contained within the second filter element such that a first space is operatively formed therebetween, the first filter element operatively forming a second space interiorly thereof, each filter element being non-collapsible in the axial direction. There is also a need for rigid, self-supporting filter media that requires no support basket and is able to withstand the normal differential pressures that are applied thereto.

### Summary of the Disclosure

The present disclosure overcomes the difficulties outlined above. In one particular representative embodiment of the present disclosure, the filter sleeves are formed of material that is relatively rigid (such as the materials used in the commercially available cartridge type filters known as Betapure^{®} or PolyKLEAN^{™}) thus avoiding the necessity for a support basket within a filter housing.

In one specific representative embodiment, two separate rigid, spaced apart filter media cylinders are operatively connected to the inlet and bottom end plates such that effective filtration surface area is provided, without using support baskets required in the prior art. In other words, the arrangement of the filter sleeves of the present disclosure provides a self supporting filter element and, as such, does not require any tools in order to operatively position the filter media in the filter vessel as required in the prior art. Hence, such rigid, spaced apart filter media provides an ease of use not previously believed attained in the

### prior art.

In another specific representative embodiment, the filter media is pleated, non-collapsible filter material (such as, for example, the type used in the commercially available cartridge type filters known as Betafine^{®}D) with support netting, presently preferably, on both the up and downstream sides thereof. Such a construction may be non-collapsible but still requires the use of a supporting basket for this pleated, non-collapsible filter media.

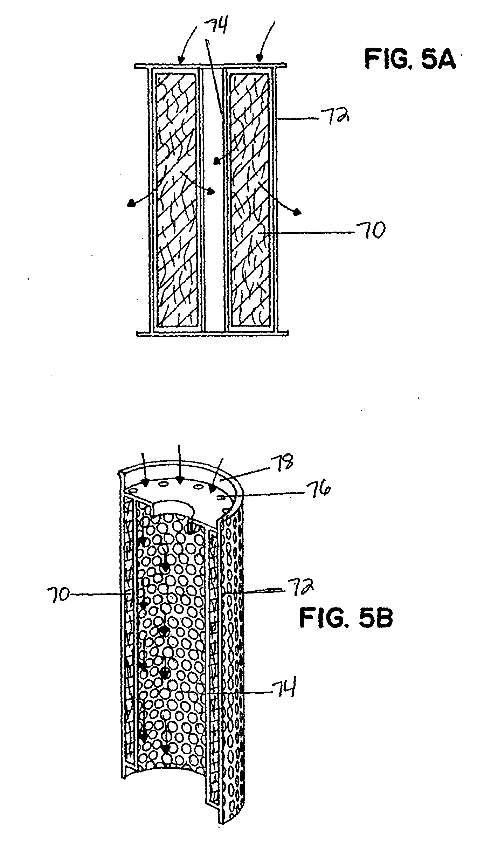

In, another specific representative embodiment of the present disclosure, a, presently preferably, annular space is formed between the, presently preferably, cylindrical filter sleeves, the space being optionally filled with an adsorptive/absorptive material, such as, but not limited to, granulated activated carbon, ion exchange materials, lead removal materials, diatomaceous earth or similar adsorption materials. In this aspect of the disclosure, the space between the first and second filter sleeves is filled with adsorptive and/or absorptive materials including, but not limited to, activated carbon powder, diatomaceous earth, anionic or cationic beads, perlite and silica gel, such as is illustrated in Figures 5(a) and 5(b).

These adsorptive and/or absorptive materials are, presently preferably, employed by dispersing loose material in a mixing tank, allowing for adsorption/absorption to occur, and then removing the material through subsequent filtering steps. An alternative method is to form a packed bed with the adsorptive and/or absorptive materials, and then flow the fluid through the bed depth to enable adsorption/absorption to occur, such as, an ion exchange column. However, small adsorptive/absorptive particles are known to be carried from the packed bed with the process fluid, and therefore need to be filtered out to prevent contamination of the downstream system... Insertion of the adsorptive/absorptive materials in the space of a disposable filter element, as described herein, would overcome the disadvantages of having to conduct separate filtering steps and render the entire filtering process easier, faster and cleaner.

Other representative embodiments include, but are not limited to, a liquid filter device comprising a first non-collapsible filter element formed of filter media; a second non-collapsible filter element formed of filter media, the first filter element being operatively positioned within the second filter element such that a first space is operatively formed therebetween, the first filter element operatively forming a second space interiorly thereof; an inlet plate, operatively connected at one end of both the first and second filter elements, the inlet plate having an outer circumferential edge and a central area, the second filter element being operatively connected to the inlet plate proximate to the outer edge of the inlet plate, the first filter element being connected to the inlet plate proximate to the central area, the inlet plate operatively communicating with the first space between the first and second filter elements such that the flow of liquid to be filtered is directed into the first space, each filter element being non-collapsible in the axial direction, the inlet plate being operatively positioned to receive liquid to be filtered when the filter element is arranged within a filtration system such that liquid will pass through the inlet plate into the first space between the first and second filter elements for traversing through the filter elements for the filtration thereof.

Thus, it is one object of at least one representative embodiment of the present disclosure to incorporate two rigid, spaced apart filter media structures operatively connected to top and bottom plates to create a filter element for use in liquid filtration application, wherein such construction provides effective filtration surface area without using supporting basket (self supporting filter element).

It is another object of at least one representative embodiment of the present disclosure to provide filter media having pleated material with support netting on the up/down stream side, wherein such construction is non-collapsible but requires the use of supporting basket for media.

It is yet another object of at least one representative embodiment of the present disclosure to provide a rigid filter element construction without a bottom plate, wherein such construction provides higher effective filtration surface area as compared to versions having a bottom plate, such as the Polymerics filter cartridge.

It is still another object of at least one representative embodiment of the present disclosure to fill the space/volume between two, spaced apart filter media with adsorptive materials, such as, but not limited to, GAC (activated carbon powder), ion exchange, lead removal, diatomaceous earth or similar powder adsorption media, wherein such construction provides for the removal of dissolved or undissolved contaminations from the fluid by the filler adsorption media and mechanical filtration takes place in the outer media cylinders.

Other objects and advantages of the disclosure will be apparent from the following description, the accompanying drawings and the appended claims.

### Detailed Description of the Drawings

Other features, advantages and details of the present disclosure are described further below in connection with the accompanying drawings.
Figure 1 is a cross-sectional view illustrating the spaced apart arrangement of the rigid filter sleeves of the present disclosure.
Figure 2 is a cross-sectional view illustrating the spaced apart arrangement of the non-collapsible filter sleeves in which the sleeves are made of pleated material of the present disclosure.
Figure 3 is a longitudinal cross-sectional view illustrating the filtration device of the present disclosure with the support basket.
Figure 4 is a cross-sectional view illustrating the arrangement of the rigid filter media with the inlet plate of the present disclosure.
Figures 5(a) and 5(b) are diagrammatic views illustrating a representative embodiment of the present disclosure in which the space is filled with adsorptive/absorptive material.

### Detailed Description of the Disclosure

As used in the present disclosure, the term, "filter media" shall mean that which provides the filtration means for liquids. Filter media construction may be rigid or pleated and is presently preferably in cylindrical form.

As used in the present disclosure, the term, "rigid filter media" shall mean media formed in a geometrical or irregular shape, which is not axially collapsible and self-supporting where as no support basket is required after filter element assembly is completed and includes but is not limited to, such examples as Cuno Micro-Klean^{®}, Betapure^{®} and PolyKLEAN^{™} media or graded density media, to name but a few of the many possibilities.

As used in the present disclosure, the term, "pleated filter media" shall mean media formed in a geometrical shape or irregular shape, which is not axially collapsible after the filter element assembly is completed.

As used in the present disclosure, the term, "adsorption media" shall mean media which can be filled in the space between two spaced apart filter media and removes contamination by adsorption and not by mechanical filtration, including, but not limited to, granular carbon (GAC).

As used in the present disclosure, the term, "inlet or top plate" shall mean a rigid or semi flexible plate with openings for allowing fluid to enter the filter and contact the housing and/or supporting basket. This plate may be of two piece construction assembled together. The filter media is operatively connected to this plate.

As used in the present disclosure, the term, "bottom plate" shall mean a rigid or semi flexible plate, which provides the means to attach filter media in order to operatively close the bottom space between the inner and outer media elements.

As used in the present disclosure, the term, "basket" shall mean two geometrically shaped or irregularly shaped elements perforated and operatively connected to the bottom plate so that a center opening and an operative connection (not necessarily a solid connection) between two members, presently preferably, cylinders is established.

As used in the present disclosure, the term, "GAC shall mean Granular activated carbon media used in water filtration.

As used in the present disclosure, the term, "MK" shall mean Rigid Micro-Klean^{®} filter media as manufactured by Cuno, Inc.

As used in the present disclosure, the term, "BP" shall mean Betapure^{®} filter media.

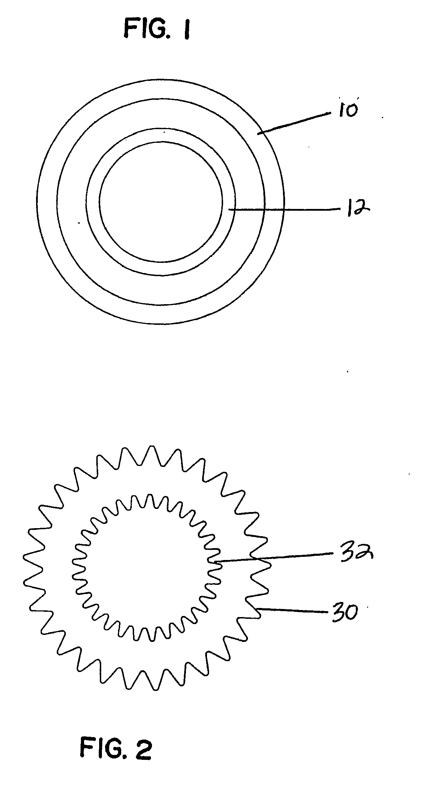

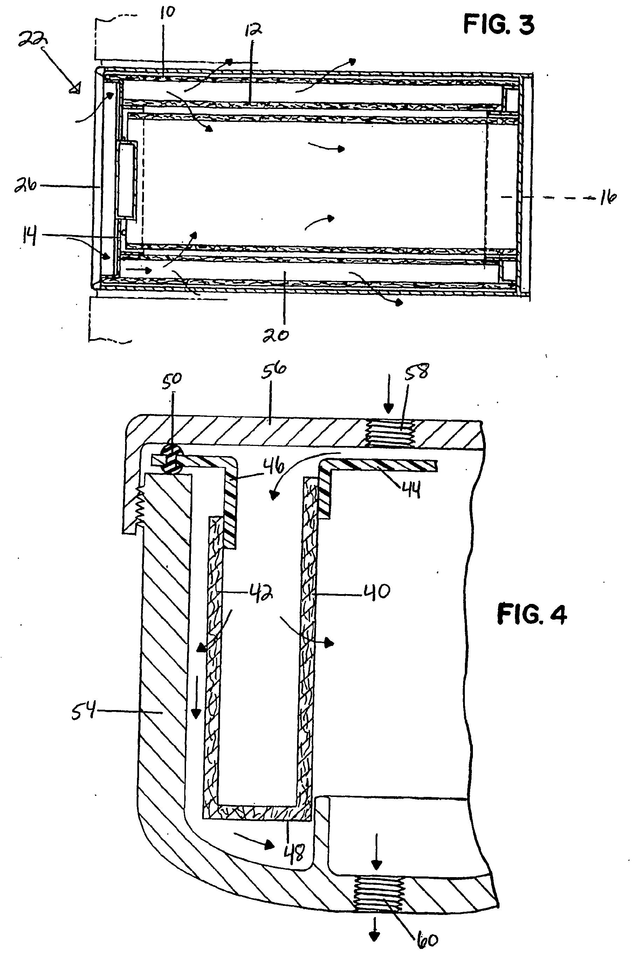

Referring now to Figures 1 and 3, two spaced apart rigid filter media elements 10, 12 having a predetermined geometrical shape or irregular shape, are illustrated as, presently preferably, cylinders, and are operatively connected to a top inlet plate 14 and a bottom plate 16 to form a filter cartridge 20. Due to the rigid media structure, a supporting basket is not required. Once formed, the filter cartridge 20 is operatively positioned into a conventional filter bag housing 22. As illustrated in Figure 3, the housing cover 26 presses against the top plate 14, hence preventing by-pass of influent to effluent. As illustrated, utilization of MK or BP media would be ideal in the appropriate application.

Referring now to Figure 2, filtration media 30, 32 could be pleated in order to increase the effective filtration area. Such pleated design would most likely provide longer filter life, since the surface area of the filtration media is increased by pleating. Utilizing such pleated filtration media would require a support structure, such as a basket, a core or a basket (not shown) in order to prevent filter media collapse. Presently preferably, it is believed that, in order to maximize effective filter area, pleated structure including, but not limited to, the pleated structure disclosed in U.S. Patent 6,315,130 would be operatively functional. The pleated media used would, presently preferably, be similar to Cuno Betafine^{®}XL or Betafine^{®}D cartridges which are disclosed in U.S. Patent 6,315,130, above. It is believed that the pleat geometry utilized may be Cuno Advanced Pleat technology standard pleats or any pleat geometry that operatively functions in the environment of use.

The inner pleat 32 pack is then placed inside the outer pleat 30 pack followed by the top and bottom end caps being assembled thereto, as would be known to those skilled in the art. This assembly, once complete, then would resemble a DuoFlo^{®} filter element, as illustrated, for example, in U.S. Patent Nos. 6,238,560 and 6,030,531.

Referring now to Figure 4, the filter media could be rigid, such as, for example, Polymerics or other equivalent. In this embodiment, the media elements 40, 42 are operatively connected to an inner plate 44 and an outer plate 46. Thus, there is no need for a bottom plate, as the bottom comprises rigid filter media element 48 operatively connecting the other two media elements 40, 42.

As illustrated, the outer plate 46 may include sealing means, such as, for example, an o-ring or molded-in elastomer 50. This filter sub-assembly is positioned into the housing sump 54 and the housing cover 56 is tightened to secure the various components into operable position. As the cover 56 is tighten, the o-ring 50 is compressed, hence providing the necessary seal. Fluid flows from the center inlet 58 of the housing cover, passes through filter media elements 40, 42, 48 and out from the bottom 60 of the sump 54, as illustrated by the arrows in Figure 4.

Referring now to Figure 5(a), the embodiment illustrated provides for filling the space/volume 70 between two spaced apart filter media elements 72, 74 shaped, presently preferably, as cylinders, with other filtration media, including, but not limited to, GAC, ion exchange, lead removal, DE or similar granular media. The illustrated embodiment provides the additional feature for removal of dissolved or un-dissolved contaminations from the fluid by the filler adsorption media while mechanical filtration occurs in the two spaced apart media elements. Additionally, the two spaced apart filter media cylinders prevent all the adsorption media from escaping into effluent. Further, this embodiment requires sealing the openings 76 in the top plate 78 with similar filter media to keep the adsorption media in place during shipping/handling.

As should be clear to a person skilled in the art, all of the above described embodiments create improved liquid filtration elements as compared to prior conventional bag type filter elements. The rigid, non-collapsible, construction thereof eliminates the requirement, in nearly all described embodiments for the supporting basket. Additionally, some of the above described embodiments provide for the volume between the two spaced apart filter elements to be filled with additional filtration media.

While the articles, apparatus and methods for making the articles contained herein constitute preferred embodiments of the invention, it is to be understood that the disclosure is not limited to these precise articles, apparatus and methods, and that changes may be made therein without departing from the scope of the disclosure which is defined in the appended claims.

## Claims

1. A liquid filter element comprising:
a first filter sleeve (12,40) formed of a first rigid filter media;
a second filter sleeve (10,42) formed of a second rigid filter media, the first filter sleeve being operatively arranged within the second filter sleeve thereby forming a first space (70) therebetween, the first filter sleeve forming a second space interiorly thereof ;
an inlet plate (14,44,46), operatively connected at a first longitudinal end of both the first and second filter sleeves, the inlet plate having an outer edge and a central area corresponding to the cross-sectional area of the second space, the second filter sleeve being operatively connected to the inlet plate proximate to the outer edge of the inlet plate, the first filter sleeve being connected to the inlet plate proximate to the central area, the inlet plate communicating with the first space between the first and second filter sleeves to thereby permit the flow of liquid to be filtered into the first space, the inlet plate being oriented to receive liquid to be filtered when the filter element is arranged within the filtration system such that liquid will pass through the inlet plate into the first space between the first and second filter sleeve for passing through the filter sleeves for filtration thereof; and
a structure, operatively connected to the first and the second filter sleeves, for directing fluid flow through the first and the second filter sleeves, wherein the first space (70) between the two filter media is filled with adsorptive and/or adsorptive materials.

2. The liquid filter element of claim 1, wherein the filter media (30,32) is pleated.

3. The liquid filter element of claim 1, wherein the adsorptive material is selected from the group comprising:
activated carbon powder, ion exchange resin, lead removal media, diatomaceous earth or a combination of such adsorption material.

4. The liquid filter element of claim 1, wherein the pleated filter media further includes:
support netting on up/down stream sides thereof.

5. The liquid filter element of Claim 1 including a third rigid filter media (48) operatively connecting the first and second filter sleeves at a second longitudinal end of both the first and second filter sleeves opposite the first longitudinal end.

6. A liquid filter system comprising:
a filter element according to any preceding claim; and
a filter housing (54,56), the filter element being operatively positioned within the filter housing.

## Patentansprüche

1. Flüssigkeitsfilterelement, das Folgendes aufweist:
eine erste Filterhülse (12, 40), die aus einem ersten starren Filtermedium gebildet ist;
eine zweite Filterhülse (10, 42), die aus einem zweiten starren Filtermedium gebildet ist, wobei die erste Filterhülse betriebsbereit innerhalb der zweiten Filterhülse angeordnet ist, wodurch ein erster Raum (70) dazwischen gebildet wird, wobei die erste Filterhülse im Inneren davon einen zweiten Raum bildet;
eine Einlassplatte (14, 44, 46), die bei einem ersten längs verlaufenden Ende sowohl der ersten als auch der zweiten Filterhülse betriebsbereit verbunden ist, wobei die Einlassplatte eine äußere Kante und eine zentrale Fläche aufweist, welche der Querschnittsfläche des zweiten Raums entspricht, wobei die zweite Filterhülse mit der Einlassplatte in der Nähe der äußeren Kante der Einlassplatte betriebsbereit verbunden ist, wobei die erste Filterhülse mit der Einlassplatte in der Nähe der zentralen Fläche verbunden ist, wobei die Einlassplatte mit dem ersten Raum zwischen der ersten und der zweiten Filterhülse kommuniziert, um dadurch den Flüssigkeitsstrom zu ermöglichen, der in den ersten Raum gefiltert werden soll, wobei die Einlassplatte ausgerichtet ist, um eine zu filternde Flüssigkeit aufzunehmen, wenn das Filterelement innerhalb des Filtrationssystems derart angeordnet ist, dass Flüssigkeit durch die Einlassplatte in den ersten Raum zwischen der ersten und der zweiten Filterhülse strömt, um durch die Filterhülsen zur Filtration davon zu strömen; und
eine Struktur, die mit der ersten und der zweiten Filterhülse betriebsbereit verbunden ist, um einen Fluidstrom durch die erste und die zweite Filterhülse zu leiten, wobei der erste Raum (70) zwischen den zwei Filtermedien mit adsorptionsfähigen und/oder absorptionsfähigen Materialien gefüllt ist.

2. Flüssigkeitsfilterelement nach Anspruch 1, wobei die Filtermedien (36, 37) gefaltet sind.

3. Flüssigkeitsfilterelement nach Anspruch 1, wobei das adsorptionsfähige Material aus der Gruppe ausgewählt ist, die Folgendes aufweist:
Aktivkohlepulver, Ionenaustauschharz, Bleientfernungsmedien, Diatomeenerde oder eine Kombination eines solchen Adsorptionsmaterials.

4. Flüssigkeitsfilterelement nach Anspruch 1, wobei die gefalteten Filtermedien Folgendes aufweisen:
ein Stützgeflecht auf stromaufwärts/stromabwärts verlaufenden Seiten davon.

5. Flüssigkeitsfilterelement nach Anspruch 1, das ein drittes starres Filtermedium (48) aufweist, das die erste und die zweite Filterhülse bei einem zweiten längs verlaufenden Ende sowohl der ersten als auch der zweiten Filterhülse gegenüber von dem ersten längs verlaufenden Ende betriebsbereit verbindet.

6. Flüssigkeitsfiltersystem, das Folgendes aufweist:
ein Filterelement nach einem der vorhergehenden Ansprüche; und
ein Filtergehäuse (54, 56), wobei das Filterelement innerhalb des Filtergehäuses betriebsbereit positioniert ist.

## Revendications

1. Elément filtrant pour liquides comportant :
un premier manchon filtrant (12, 40) formé d'un premier milieu filtrant rigide ;
un deuxième manchon filtrant (10, 42) formé d'un deuxième milieu filtrant rigide, le premier manchon filtrant étant disposé de façon fonctionnelle à l'intérieur du deuxième manchon filtrant, formant ainsi entre eux un premier espace (70), le premier manchon filtrant formant un deuxième espace intérieurement à celui-ci ;
une plaque d'admission (14, 44, 46) reliée de façon fonctionnelle à une première extrémité longitudinale des premier et deuxième manchons filtrants à la fois, la plaque d'admission présentant un bord extérieur et une zone centrale correspondant à l'aire de la section droite du deuxième espace, le deuxième manchon filtrant étant relié de façon fonctionnelle à la plaque d'admission à proximité du bord extérieur de la plaque d'admission, le premier manchon filtrant étant relié à la plaque d'admission à proximité de la zone centrale, la plaque d'admission communiquant avec le premier espace entre les premier et deuxième manchons filtrants pour permettre ainsi l'écoulement du liquide à filtrer dans le premier espace, la plaque d'admission étant orientée de manière à recevoir le liquide à filtrer lorsque l'élément filtrant est disposé à l'intérieur du système de filtration de telle sorte que le liquide traverse la plaque d'admission pour entrer dans le premier espace entre le premier et le deuxième manchon filtrant pour traverser les manchons filtrants pour sa filtration ; et
une structure, reliée de façon fonctionnelle aux premier et deuxième manchons filtrants, destinée à diriger l'écoulement du fluide à travers les premier et deuxième manchons filtrants, le premier espace (70) entre les deux milieux filtrants étant rempli de matériaux adsorbants et/ou absorbants.

2. Elément filtrant pour liquides selon la revendication 1, le milieu filtrant (30, 32) étant plissé.

3. Elément filtrant pour liquides selon la revendication 1, le matériau adsorbant étant choisi dans le groupe formé de :
la poudre de carbone activé, la résine échangeuse d'ions, les milieux d'élimination du plomb, la terre à diatomées ou une combinaison de tels matériaux adsorbants.

4. Elément filtrant pour liquides selon la revendication 1, le milieu filtrant plissé comprenant en outre :
un treillis de soutien sur ses côtés amont/aval.

5. Elément filtrant pour liquides selon la revendication 1, comprenant un troisième milieu filtrant rigide (48) reliant de façon fonctionnelle les premier et deuxième manchons filtrants à une deuxième extrémité longitudinale des premier et deuxième manchons filtrants à la fois, opposée à la première extrémité longitudinale.

6. Système filtrant pour liquides comportant :
un élément filtrant selon l'une quelconque des revendications précédentes ; et
un boîtier de filtre (54, 56), l'élément filtrant étant positionné de façon fonctionnelle à l'intérieur du boîtier de filtre.
